# EUROPEAN PATENT APPLICATION

(11) **EP 4 693 054 A1**
(43) Date of publication of application: **11.02.2026**
(21) Application number: 25193100.2
(22) Date of filing: 31.07.2025
(51) Int. Cl.: G06F 13/16

(54) **SYSTEMS AND METHODS FOR MULTI-PRECISION MEMORY RETRIEVAL**

(30) Priority: 05.08.2024 US 202463679523 P; 06.05.2025 US 202519200446
(71) Applicant: Samsung Electronics Co., Ltd., Suwon-si, Gyeonggi-do 16677 (KR)
(72) Inventor: GAGNON, Garrett Robert, San Jose, CA, 95134 (US); KANG, Yangwook, San Jose, CA, 95134 (US); MALLA, Srikanth, San Jose, CA, 95134 (US); JEONG, Hyoun Kwon, San Jose, CA, 95134 (US)
(74) Representative: Kuhnen & Wacker Patent- und Rechtsanwaltsbüro PartG mbB

(57) **Abstract**

A system for retrieving data at multiple precision levels includes a processor (102), a memory device (104) for storing a first portion of data in association with a first interface and a second portion of data in association with a second interface, and a combiner unit. The combiner unit (118) is communicably coupled to the memory device (104) and the processor (102) and includes a first buffer coupled to the first interface for receiving the first portion of data; and a second buffer coupled to the second interface for receiving the second portion of data. The combiner unit (118) further includes selectors coupled to the first and second buffers. The one or more selector units select for output the first portion of data based on the combiner unit (118) being in a first state and the first portion of data and the second portion of data based on the combiner unit (118) being in a second state.

## Description

### FIELD

One or more aspects of embodiments according to the present disclosure relate to memory systems, and more particularly to retrieving data from a memory system at multiple levels of precision.

### BACKGROUND

A processor may need to retrieve data from memory to perform various computations. As computation speed and the amount of data used increases, the speed at which data can be accessed from memory also becomes a relevant factor to the overall speed of these computations.

The above information disclosed in this Background section is only for enhancement of understanding of the background of the present disclosure, and therefore, it may contain information that does not form prior art.

### SUMMARY

One or more embodiments of the present disclosure are directed to a system for multi-precision memory retrieval. The system includes a processor, a memory device for storing a first portion of data in association with a first interface and a second portion of data in association with a second interface, and a combiner unit communicably coupled to the memory device and the processor. The combiner unit includes a first buffer coupled to the first interface for receiving the first portion of data, a second buffer coupled to the second interface for receiving the second portion of data, and one or more selector units coupled to the first buffer and second buffer. The one or more selector units select for output the first portion of data based on the combiner unit being in a first state, and select for output the first portion of data and the second portion of data based on the combiner unit being in a second state.

In some embodiments, the one or more selector units include a first multiplexer and a second multiplexer. A first input of the first multiplexer is coupled to the first buffer, and a second input of the first multiplexer is coupled to the second buffer. A first input of the second multiplexer is coupled to the first buffer, a second input of the second multiplexer is coupled to the second buffer, and a third input of the second multiplexer is coupled to an adjustment value generator.

In some embodiments, the second multiplexer selects the third input as an output based on the combiner unit being in the first state.

In some embodiments, the combiner unit further includes a combiner coupled to an output of the first multiplexer and an output of the second multiplexer. The combiner joins the output of the first multiplexer with the output of the second multiplexer.

In some embodiments, the first state is associated with a first level of precision for the data, and the second state is associated with a second level of precision for the data.

In some embodiments, the combiner unit further includes a filter configured to detect a criterion associated with the first portion of data and set an output of the combiner unit to a predetermined value based on the criterion.

In some embodiments, the criterion is that the first portion of data has a value of zero.

In some embodiments, the first state or the second state is selected from among *n* states, wherein *n* is based on a number of portions into which the data is partitioned.

In some embodiments, the processor is communicably coupled to the memory device and the combiner unit, and the processor is configured to receive an output of the memory device based on a first criterion and an output of the combiner unit based on a second criterion.

One or more embodiments of the present disclosure are directed to a device for multi-precision memory retrieval. The device includes a combiner unit communicably coupled to a memory device and a processor. The combiner unit includes a first buffer coupled to the first interface for receiving the first portion of data, a second buffer coupled to the second interface for receiving the second portion of data, and one or more selector units coupled to the first buffer and second buffer. The one or more selector units select for output the first portion of data based on the combiner unit being in a first state, and select for output the first portion of data and the second portion of data based on the combiner unit being in a second state.

In some embodiments, the one or more selector units include a first multiplexer and a second multiplexer. A first input of the first multiplexer is coupled to the first buffer, and a second input of the first multiplexer is coupled to the second buffer. A first input of the second multiplexer is coupled to the first buffer, a second input of the second multiplexer is coupled to the second buffer, and a third input of the second multiplexer is coupled to an adjustment value generator.

In some embodiments, the combiner unit further includes a combiner coupled to an output of the first multiplexer and an output of the second multiplexer. The combiner joins the output of the first multiplexer with the output of the second multiplexer.

In some embodiments, the first state is associated with a first level of precision for the data, and the second state is associated with a second level of precision for the data.

In some embodiments, the combiner unit further includes a filter configured to detect a criterion associated with the first portion of data and set an output of the combiner unit to a predetermined value based on the criterion.

In some embodiments, the first state or the second state is selected from among n states, wherein n is based on a number of portions into which the data is partitioned.

One or more embodiments of the present disclosure are directed to a method for multi-precision memory retrieval. A combiner unit receives an instruction to retrieve a data item from a memory device at a first precision level. A first portion of the data item is stored at a first location on the memory device and a second portion of the data item is stored at a second location on the memory device. A first buffer receives the first portion of the data item from the memory device. One or more selectors select, for output, an adjustment value. A combiner appends the first portion of the data item with the adjustment value. The combiner unit provides the first portion of the data item with the adjustment value to a processor.

In some embodiments, a multiplexer selects the adjustment value, and the second portion of the data item is a first input to the multiplexer and the adjustment value is a second input to the multiplexer.

In some embodiments, the combiner unit determines that the first portion of the data item has a value of zero and updates the value of the appended data to zero.

In some embodiments, the first portion of the data item comprises bits of higher significance than bits in the second portion of the data item.

In some embodiments, the combiner unit receives a second instruction to retrieve the data item from the memory device at a second precision level. The first buffer receives the first portion of the data item from the memory device. A second buffer receives the second portion of the data item from the memory device. One or more selectors select, for output, the second portion of the data item. A combiner appends the first portion of the data item with the second portion of the data item. The combiner unit provides the first portion of data appended with the second portion of the data item to the processor.

These and other features, aspects and advantages of the embodiments of the present disclosure will be more fully understood when considered with respect to the following detailed description, appended claims, and accompanying drawings. Of course, the actual scope of the invention is defined by the appended claims.

### BRIEF DESCRIPTION OF THE DRAWINGS

Non-limiting and non-exhaustive embodiments of the present embodiments are described with reference to the following figures, wherein like reference numerals refer to like parts throughout the various views unless otherwise specified.
FIG. 1 depicts a block diagram of a computing system for truncating data and retrieving the truncated data at multiple levels of precision according to one or more embodiments.
FIG. 2 depicts a conceptual layout diagram of a data element that undergoes a data truncation and repackaging process according to one or more embodiments.
FIG. 3 depicts the data element of FIG. 2 retrieved at two different precision levels according to one or more embodiments.
FIG. 4 depicts another data element that undergoes a data truncation and repackaging process according to one or more embodiments.
FIG. 5 depicts the data element of FIG. 4 retrieved at three different precision levels according to one or more embodiments.
FIG. 6 depicts a block diagram of a computing system for retrieving data at two or more precision levels according to one or more embodiments.
FIG. 7 depicts a block diagram of a computing system for retrieving data at two or more precision levels according to one or more embodiments.
FIG. 8 depicts a block diagram of a combiner unit for retrieving data at two or more precision levels according to one or more embodiments.
FIG. 9 depicts a block diagram of a process for retrieving data at two or more precision levels according to one or more embodiments.
FIG. 10 depicts a block diagram of a process for retrieving data at two or more precision levels according to one or more embodiments.

### DETAILED DESCRIPTION

Hereinafter, example embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof may not be repeated. Further, in the drawings, the relative sizes of elements, layers, and regions may be exaggerated and/or simplified for clarity.

Many modern computations require large amounts of data to be processed, such as for machine learning and artificial intelligence applications. Advancement of computing power may allow the large amounts of data to be processed at high speeds. However, in order to process the data, data is to be retrieved from memory. In many situations, computational speed of processors may outpace the speed at which memory can be retrieved from memory. Thus, the speed at which data can be retrieved from memory may become a bottleneck that decreases the overall computational throughput. It may be desirable to increase the speed of memory retrieval while minimizing error in the retrieved data. Doing so could improve the overall speed and efficiency of computing technology.

One or more embodiments of the present disclosure provides systems, devices, and methods that allow data to be retrieved from memory at two or more (multiple) levels of precision. Data retrieved at a relatively high level of precision may result in more bits of the data being retrieved and may thus have high fidelity. Data retrieved at a relatively lower level of precision may result in fewer bits of the data being retrieved, which may allow for faster retrieval, but at a lower fidelity. However, there may be situations in which data retrieved at a lower level of precision maintains an adequate level of accuracy, or even suffers no loss in accuracy at all. In those cases, the increase in throughput that may result from the retrieval of fewer bits of data may make up for any loss in the accuracy of the computation that uses the lower precision data. Thus, it may be advantageous to control and change the level of precision at which data can be retrieved from a memory device.

According to some embodiments, the manner in which data is stored in the memory allows the retrieval of the data at different levels of precision. In some embodiments, a piece or block of data is split into two or more portions and stored in two or more locations of the memory in association with two or more memory interfaces. For example, an 8-bit data item may be split into a first portion and a second portion. The first portion may include 4 bits of data with the highest place (or highest placement) values (i.e., the 4 most significant bits of the data), and the second portion may include 4 bits of data with the lower place (or lower placements) values (i.e., the 4 less significant bits of the data). The first portion may be stored in a first portion of the memory associated with a first channel or interface (e.g., a first pseudo or virtual channel) of a memory device (also referred to as a memory bank), and the second portion may be stored in a second portion of the memory associated with a second channel (e.g., a second pseudo or virtual channel) of the memory bank. The storing of the data according to this structure may allow the data item to be retrieved at a first precision level (e.g., a high or full precision level) which includes the first portion and the second portion of data (e.g., all 8 bits of data), or at a second precision level (e.g., a lower precision level) which includes (e.g., only includes) the first portion of data (e.g., the 4 highest value bits of data).

In some embodiments, the multi-precision retrieval of a data item is enabled via a hardware configuration that includes a combiner unit coupled in between a memory device and a processor (or other destination of the retrieved data). The combiner unit may be configured to retrieve data from the first pseudo-channel, the second pseudo-channel, or both, depending on an identified retrieval precision. In some embodiments, the combiner unit includes a first buffer and a second buffer which receive data from the first and second pseudo-channels, respectively. In this regard, the first buffer stores the first portion of data and the second buffer stores the second portion of data.

The two buffers may feed into two selection units that may take the form of a first multiplexer and a second multiplexer. In some embodiments, the output of the first buffer feeds into the first and second multiplexers, and the output of the second buffer also feeds into the first and second multiplexers. The first and second multiplexers may selectively pass data from the first buffer or the second buffer. In this example hardware configuration, and also referring to the 8-bit store data example above, the first multiplexor may pass data from the first buffer which is coupled to the first pseudo-channel, based on detecting a first data retrieval precision level (e.g., a low precision). Because the first buffer stores the first portion of data, this may result in a truncated portion of the data being retrieved from memory that includes the higher value group of 4 bits of data, without retrieving or dropping the lower value group of 4 bits. In this example, the amount of data retrieved is decreased by half, which may increase the throughput by a factor of 2.

In some embodiments, in order to minimize the error that may be introduced by foregoing the lower value group of data bits, an adjustment value may be added to the retrieved data to take the place of the dropped bits. For example, the adjustment value may be a central value between the maximum possible value of the dropped bits and the minimum possible value of the dropped bits, although embodiments are not limited thereto. The adjustment value may be set to other values for different use-cases and data types.

The adjustment value may be an input to the second multiplexer. In some embodiments, for a low precision retrieval, the higher value group of data bits is retrieved and passed through or selected by the first multiplexer without retrieving the lower value group of data bits, and the adjustment value is passed through or selected by the second multiplexer. The retrieved data bits (e.g., the 4 higher value group bits) may be combined with the adjustment value to form a full (e.g., an 8-bit) data item, which can be used by the processor to perform a computation and output a result.

Described above is a simplified example of a basic scenario for purposes of illustrating an embodiment of the present disclosure. A person of skill in the art should recognize that a data item may be split into any number of groups or portions and stored in the memory for retrieval at any number of precision levels that may be suitable for the number of groups. For example, a 16-bit data item can be split into 4 groups of 4 bits each, allowing the data to be retrieved at up to four precision levels. In some examples, the 16-bit data item may be split into 8 groups of 2 bits each, allowing the data to be retrieved at up to 8 precision levels. The combiner unit may have a corresponding number of multiplexers and other elements suitable for handling the different data sizes and precision levels.

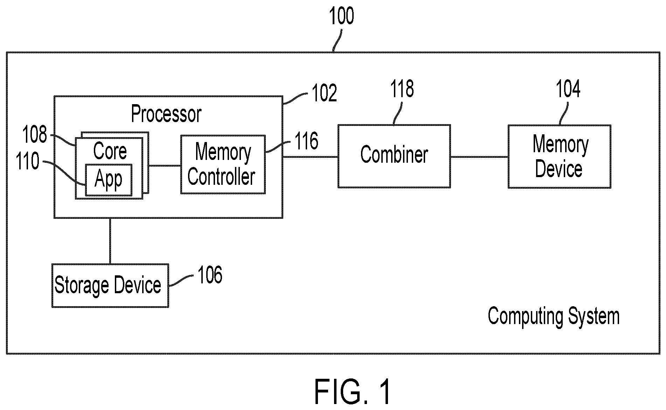

Turning now to the figures, FIG. 1 depicts a block diagram of a computing system 100 for retrieving data at multiple levels of precision according to one or more embodiments. The system 100 may include a processor 102, memory 104, a combiner unit 118, and a storage device 106. The processor 102 may include a general purpose or special purpose central processing unit (CPU) or CPU core 108 configured to run one or more applications or programs 110 based on instructions stored in the memory 104. In some embodiments, the processor 102 may also be embodied (or may include) integrated circuits, application specific integrated circuits (ASICs), field programmable gate arrays (FPGAs), programmable logic arrays (PLAs), graphics processing units (GPUs), tensor processing units, co-processors, microcontrollers, and/or the like.

In some embodiments, the memory 104 may include (or may be) volatile memory, such as, for example, a dynamic random-access memory (DRAM) that stores computer program instructions for execution by the processor 102, and/or stores other types of data, but the present disclosure is not limited thereto, and the memory 104 may include any suitable kind of volatile and/or non-volatile memory. For example, the memory 104 may be (or may include) read only memory (ROM), random access memory (RAM), high bandwidth memory (HBM), and/or the like. In some embodiments, the processor accesses the memory 104 over a system bus.

The application 110 may be any application configured to perform a workload. For example, the application 110 may a big data analysis application, e-commerce application, database application, machine learning application, and/or the like. In some embodiments, the application includes a large language model (LLM) that generates tokens for self-attention, although embodiments are not limited thereto. For example, the application may include a generalized machine learning model that computes weights during training of the model. The workload executed by the application 110 (e.g., for self-attention) may transmit requests (e.g., data read or load requests) to the memory 104 or storage device 106 to perform a task (e.g., a computation) using the retrieved data. A result of the task may be used by the application to generate an output. For example, if the application is an LLM, the output may be recommended text based on received input text.

In some embodiments, the processor 102 sends and receives data to and from the storage device 106 over a data communications link. The data communications link may include various general-purpose interfaces such as, for example, Ethernet, Universal Serial Bus (USB), and/or any wired or wireless data communication link. In some embodiments, an interface protocol such as, for example, a Compute Express Link (CXL) protocol is used for communication between the processor 102 and the storage device 106, although embodiments are not limited thereto. For example, in addition or in lieu of CXL, the processor 102 may communicate with the storage device 106 using other protocols such as Cache Coherent Interconnect for Accelerators (CCIX), dual in-line memory module (DIMM) interface, Small Computer System Interface (SCSI), Non Volatile Memory Express (NVMe), Peripheral Component Interconnect Express (PCIe), remote direct memory access (RDMA) over Ethernet, Serial Advanced Technology Attachment (SATA), Fiber Channel, Serial Attached SCSI (SAS), NVMe over Fabric (NVMe-of), iWARP protocol, InfiniBand protocol, 5G wireless protocol, Wi-Fi protocol, Bluetooth protocol, and/or the like.

In some embodiments, the storage device 106 is a secondary memory device such as, for example, a solid state drive (SSD). In some embodiments, the storage device 106 is implemented as a computational storage device (for example, an SSD with an embedded processor or Field Programmable Gate Array (FPGA)). However, the present disclosure is not limited thereto, and in some embodiments, the storage device 106 may include (or may be) any suitable storage device, such as, for example, a magnetic storage device (e.g., a hard disk drive (HDD), and the like), an optical storage device (e.g., a Blue-ray disc drive, a compact disc (CD) drive, a digital versatile disc (DVD) drive, and the like), other kinds of flash memory devices (e.g., a USB flash drive, and the like), and/or the like.

In some embodiments, the processor 102 includes a memory controller 116 configured to manage the writing and reading of data to and from the memory 104. In this regard, the memory controller 116 may receive read or write instructions from the application 110 and identify a physical address of the memory 104 in which to read or write the data. The data may include, for example, one or more elements (e.g., one or more keys and values) of an array, matrix, tensor, and/or other data structure. The data may be generated by the application 110 (e.g., a machine learning model) during execution of a workload.

In some embodiments, the memory controller 116 splits, separates, or truncates the data that is subject of a write command, into at least a first portion (or group) and a second portion (or group). In some embodiments, the splitting of the data results in the decoupling of data significance. The splitting of the data may include truncating the initial data item at a truncation point, and storing the truncated data as a separate data structure (e.g., a separate matrix) in the memory 104. For example, if the data includes an 8-bit floating point or integer datatype element, the memory controller 116 may split the data so that the first portion includes 4 bits of data with the highest positional or place values (e.g., the 4 most significant bits of the element), and the second portion includes 4 bits of data with the lowest positional or place values (e.g., the 4 least significant bits of the element). Of course, this is a simplified example that illustrates a basic scenario. A person of skill in the art should recognize that a data item may be split into any number of groups or portions, and stored in the memory 104 for retrieval at any number of precision levels that may be suitable for the number of portions.

In some embodiments, the memory controller 116 processes a read command from the application 110 for a data item that is stored in the memory 104 in split form. The data item may be for performing a task (e.g., a computation) by the application 110. The memory controller 116 may process the read command by identifying a precision level at which the requested data is to be retrieved. In some embodiments, the selected level of precision determines how many of the one or more of the separately stored portions of the data item are to be retrieved. For example, if the memory controller 116 determines that full precision is desired for the data item, all stored portions of the data item are retrieved and combined for providing to the requesting application 110. In another example, if the memory controller 116 determines that less precision is desired for the data item, the truncated portions of the data that store bits that correspond to the selected precision are retrieved without retrieving the other data portions. The memory controller 116 may add an adjustment value to the retrieved truncated data if less than the full precision data is retrieved. The adjustment value may be one that is predicted to increase accuracy of the truncated data. The retrieval of less than the full precision data according to embodiments of the present disclosure helps increase memory bandwidth while limiting the accuracy impact due to use of truncated data.

In some embodiments, the memory controller employs a hardware solution for efficiently retrieving one or more portions of data from the memory 104, and combining the retrieved portions with or without an adjustment value, for returning to the requesting application 110 of the processor 102. The hardware solution may be provided by the combiner unit 118. In some embodiments, the combiner unit 118 retrieves the one or more truncated portions of a data item from the memory 104 based on instructions or signals from the memory controller 116. The combiner unit 118 receives the one or more truncated portions of the data item, and combines or reassembles the data item at two or more levels of precision according to a selected precision level for use by the processor 102.

Although the various embodiments are described with respect to data portions being stored and read from the memory 104, a person of skill in the art should recognize that the embodiments may extend to scenarios where the data portions are written and loaded from the storage device 106.

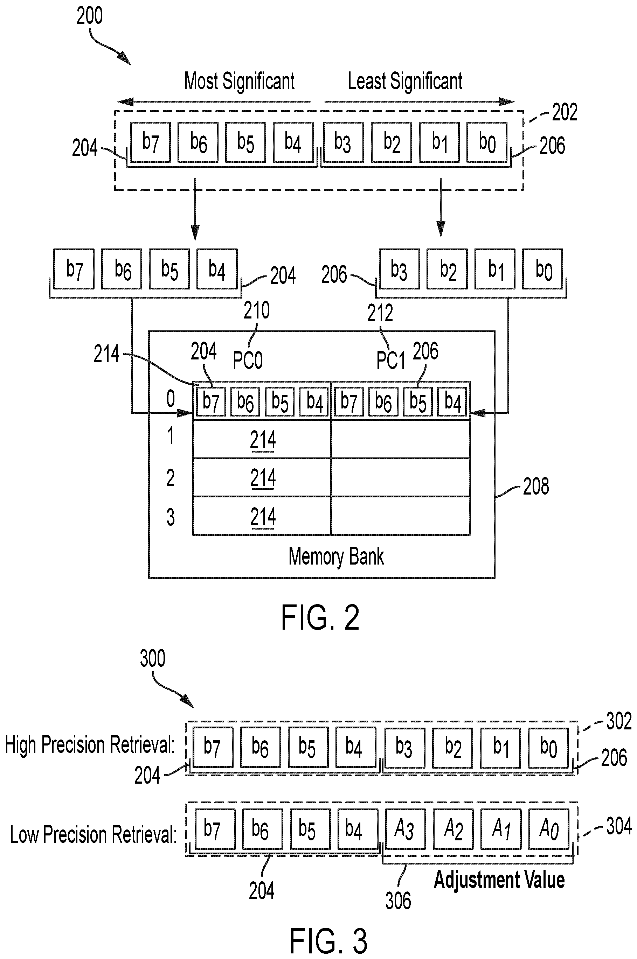

FIG. 2 depicts a conceptual layout diagram 200 of a data element 202 that undergoes a data truncation and repackaging process according to one or more embodiments. In the example of FIG. 2, the data element 202 includes eight bits of data, which can be split into a first group 204 of four bits and a second group 206 of four bits. The first group 204 may include the four bits having the most significant bit values and the second group 206 may include the four bits having the least significant bit values. The first group 204 and the second group 206 may be stored in a memory bank 208 (similar to the memory 104 of FIG. 1) at different addressable locations in the memory bank. In the example of FIG. 2, the memory bank 208 includes a first pseudo-channel (PCO) 210 and a second pseudo-channel (PC1) 212, each of which has or is associated with one or more rows 214. In this example, the first group 204 of bits is stored in a first row of the first pseudo-channel 210 and the second group 206 of bits is stored in a first row of the second pseudo-channel 212. In some embodiments, a data element can be selectively split into a minimum number of groups and a maximum number of groups, in which the minimum number is two and the maximum number is the number of bits in the data element. By splitting the data element 202 into two or more groups and storing the groups in individually addressable locations, the data element 202 can be retrieved at two or more levels of precision.

FIG. 3 depicts a conceptual representation 300 of the data element 202 of FIG. 2 retrieved at two different precision levels according to one or more embodiments. The data element 202 can be retrieved at a high precision level 302 and a low precision level 304. The data retrieved at the high precision level 302 includes both the first group 204 and second group 206 of bits that together represent the entirety of the original data element 202 (i.e., full precision). The data retrieved at the low precision level 304 includes the first group 204 of bits without the second group 206. For the low precision retrieval, less data is retrieved from memory. Hence low precision retrieval may be performed faster than the high precision retrieval.

In some embodiments, at the low precision level 304, the first group 204 of bits retrieved from the memory bank 208 may be appended with an adjustment term 306 instead of the second group 206 of bits. The adjustment term 306 may be a predetermined value used to lengthen the retrieved data to the expected number of bits. The expected number of bits may be the number of bits that are transferred by the memory bank 208 in a single data transfer transaction (e.g., a single burst). In some embodiments, the adjustment term 306 is chosen to minimize the error between the value of the data retrieved at the low precision level 304 and the original value of the data element 202. For example, the value of the adjustment term 306 may be a central value between the minimum and maximum values of the bits that were not retrieved. The terms "high precision level" and "low precision level" are used herein for explanatory purposes, and can also be called a "first precision level" and "second precision level," such as in embodiments with more than two precision levels.

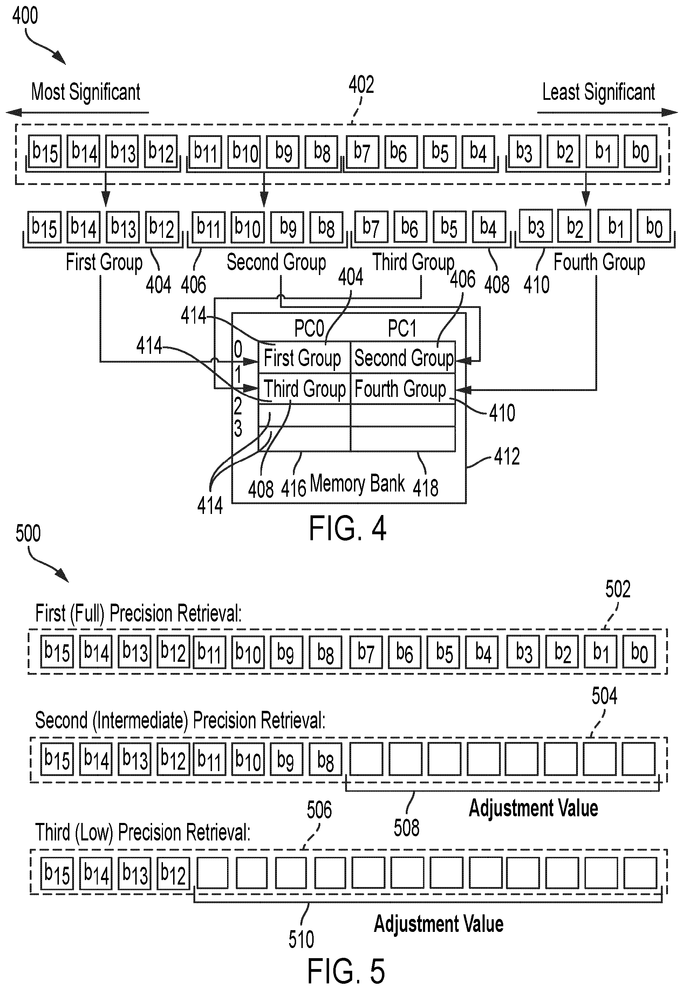

FIG. 4 depicts a conceptual layout diagram 400 of another data element 402 that undergoes a data truncation and repackaging process according to one or more embodiments. In the example of FIG. 4, the data element 402 includes sixteen bits of data, which can be split into a first group 404 of four bits, a second group 406 of four bits, a third group 408 of four bits, and a fourth group 410 of four bits, in which the first group 404 includes the four bits having the most significant bit values and fourth group 410 includes the four bits having the least significant bit values. The four groups 404, 406, 408, 410 of bits may be stored in a memory bank 412 (similar to the memory 104 of FIG. 1) at independently accessible locations in the memory bank 412. In the example of FIG. 4, the memory bank 412 includes a first pseudo-channel (PCO) 416 and a second pseudo-channel (PC1) 418, each of which has one or more rows 414.

FIG. 5 depicts a conceptual representation 500 of the data element 402 of FIG. 4 retrieved at three different precision levels according to one or more embodiments. In this example, the data element 402 can be retrieved at a first precision level 502, a second precision level 504, and a third precision level 506. The data retrieved at the first precision level 502 includes all four groups 404, 406, 408, 410 of bits and thus represents the full value of the data element 402. Data retrieved at the second precision level 504 includes the first group 404 and second group 406 of bits from the data element 402. Thus, the data retrieved at the second precision level 504 may be less precise than the data retrieved at the first precision level 502 but may be retrieved faster and use less bandwidth. Data retrieved at the third precision level 506 includes the first group 404 of bits. Data retrieved at the third precision level 506 may be even less precise but may be retrieved even faster and use even less bandwidth. In some embodiments, the data retrieved at the second and third precision levels 504, 506 may be appended with adjustment terms 508, 510 to expand the data to the expected number of bits.

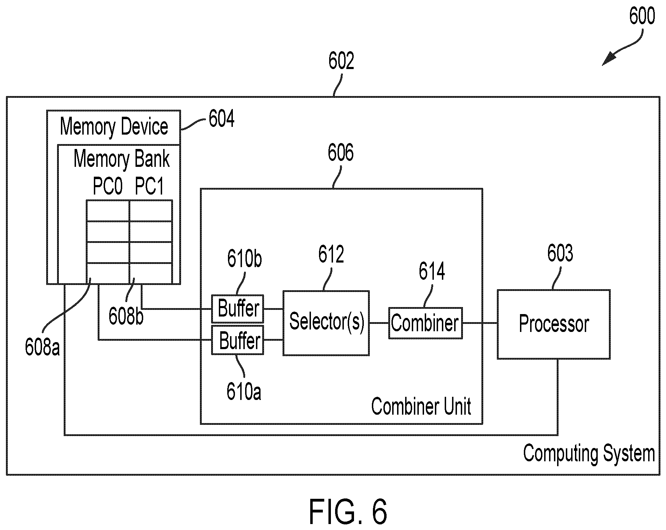

FIG. 6 depicts a block diagram representation 600 of a computing system 602 for retrieving data at multiple levels of precision according to one or more embodiments. The computing system 602 may be similar to the computing system 100 of FIG. 1. The computing system 602 includes a processor 603, a memory 604, and a combiner unit 606 communicably coupled to the processor 603 and the memory 604. The processor 603, memory 604, and combiner unit 606 may be similar to the processor 102, memory 104, and combiner unit 118 of FIG. 1. In some embodiments, the memory 604 is configured to store a first portion of a data element in association with a first interface 608a and a second portion of the data element in association with a second interface 608b. For example, the first interface 608a may include a first pseudo-channel (PCO) and the second interface 608b may include a second pseudo-channel (PC1). In some embodiments, data is retrieved from the memory 604 via the combiner unit 606 such that the data received at the processor is an output of the combiner unit 606.

In some embodiments, the processor 603 may also be communicably coupled to the memory 604, bypassing the combiner unit 606, such that the processor 603 may receive data from the memory 604 directly. In some embodiments, the processor 603 is configured to receive an output of the memory 604 based on a first criterion and an output of the combiner unit 606 based on a second criterion. The first and second criterion may be determined by the processor based on one or more factors. For example the first and second criterion may the type of data to be retrieved, the available bandwidth, and the like.

In some embodiments, the combiner unit 606 is operable in two or more states, such as a first state and a second state. In some embodiments, the states are associated with precision levels at which data can be retrieved from the memory 604. For example, the first state may be associated with a lower precision level than the second state. The first state or the second state may be selected from among n states, in which *n* is based on a number of portions into which the data is partitioned. In some embodiments, the processor 603 may control or dictate the operational state of the combiner unit 606 based on the selected data retrieval precision level. In some embodiments, the combiner unit 606 includes a first buffer 610a communicably coupled to the first interface 608a for receiving and/or storing the first portion of the data item stored in the memory 604. The combiner unit 606 may also include a second buffer 610b communicably coupled to the second interface 608b for receiving and/or storing a second portion of the data item. In some embodiments, the first and second buffers 608a, 608b may be first-in, first-out (FIFO) buffers, although embodiments are not limited thereto. The combiner unit 606 may further include one or more selectors 612 coupled to the first buffer 610a and second buffer 610b. The selector(s) 612 may be configured to select, for output, the first portion of data based on the combiner unit 606 being in a first state (e.g., a low precision state), and selecting, for output, the first portion of data and the second portion of data based on the combiner unit 606 being in a second state (e.g., a high precision state).

In some embodiments, the combiner unit 606 further includes combiner circuitry 614 coupled to the outputs of the one or more selectors 612. In some embodiments, the combiner circuitry 614 combines the outputs of the one or more selectors 612 into a single data item for use by the processor 603. For example, the combiner circuitry 614 may append the first portion of the data with the second portion of the data based on the combiner unit 606 being the second state. In some embodiments, the combiner circuitry 614 may append the first portion of the data with an adjustment term based on the combiner unit 606 being the first state.

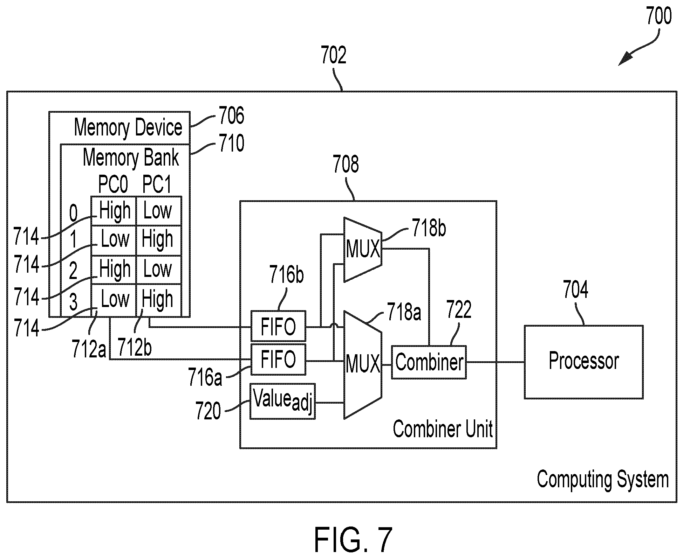

FIG. 7 depicts another block diagram representation 700 of a computing system 702 for retrieving data at multiple levels of precision according to one or more embodiments. The computing system 602 may be similar to the computing system 100 of FIG. 1. In this example, the computing device 702 includes a processor 704, a memory device 706, and a combiner unit 708. The processor 704, memory device 706, and combiner unit 708 may be similar to the processor 102, memory 104, and combiner unit 118 of FIG. 1. In this example, the memory device 706 includes a memory bank 710 in which one or more data items are stored. The memory bank 710 may further include a first pseudo-channel (PCO) 712a and a second pseudo-channel (PC1) 712b, each having one or more rows 714. The data item may be split into two or more groups of bits (i.e., portions) and each group of bits is stored in an individually addressable location in the memory bank 710, such as a particular row of a particular pseudo channel.

In this example, the combiner unit 708 includes a first FIFO (first in, first out) buffer 716a and a second FIFO buffer 716b, although embodiments are not limited thereto. In some embodiments, the first FIFO buffer 716a is configured to receive, as input, an output of the first pseudo-channel 712a of the memory bank 710. Similarly, the second FIFO buffer 716b is configured to receive, as input, an output of the second pseudo-channel 712b of the memory bank 710. In some embodiments, the combiner unit 708 further includes a first multiplexer 718a and a second multiplexer 718b. In the example embodiment, the first multiplexer 718a receives the output of the first FIFO buffer 716a as a first input and the output of the second FIFO buffer 716b as a second input. The first multiplexer may also receive an adjustment value from an adjustment value register (also referred to as an adjustment value generator) 720 as a third input. In some embodiments, the adjustment value is based on the selected precision level. Additionally, in some embodiments the adjustment value may also be determined based on one or more other factors, such as the minimum and maximum values of the data bits that are not included in the retrieved data as a result of the selected precision level. The first multiplexer 718a is configured to select between these three inputs to provide as an output. In some embodiments, the selection of which input to pass through as the output may be based on whether the desired data portion is stored in the first pseudo-channel 712a or in the second pseudo-channel 712b as well as the selected precision level.

In some embodiments, the second multiplexer 718b receives the output from the first FIFO buffer 716a as a first input and the output of the second FIFO buffer as a second input. The second multiplexer 718b is configured to select between these two inputs to provide as an ouput. In some embodiments, the selection of which input to pass through as the output may be based on whether the desired data portion is stored in the first pseudo-channel 712a or in the second pseudo-channel 712b. Thus, the first multiplexer 718a and the second multiplexer 718b are configured to select between their respective inputs based at least in part on the selected precision level and the locations of the portions of data to be retrieved in the memory bank 710, such as whether the portion of data is in the first pseudo-channel or the second pseudo-channel. In some embodiments, the combiner unit 708 further includes combiner circuitry 722. The combiner circuitry 722 receives the output from the first multiplexer 718a and the output of the second multiplexer 718b. In some embodiments, the combiner circuitry 722 joins the output of the first multiplexer 718a with the output of the second multiplexer 718b to generate a data item having the same number of bits as the original data item for providing to the processor 704. In some embodiments, the combiner circuitry 722 appends the output of the first multiplexer 718a with the output of the second multiplexer 718b. In some embodiments, the combiner circuitry 722 appends the output of the second multiplexer 718b with the output of the first multiplexer 718a.

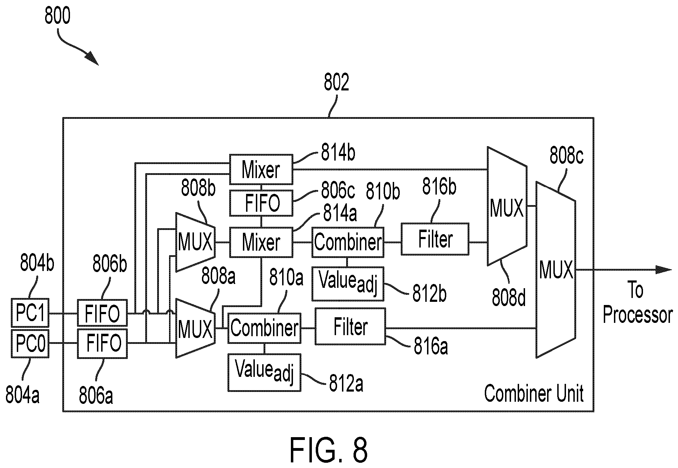

FIG. 8 depicts another block diagram representation 800 of a combiner unit 802 for retrieving data at multiple levels of precision according to one or more embodiments. The example embodiment depicted in FIG. 8 may be suitable for the example data and retrieval precision options depicted in FIGS. 4 and 5. In the example embodiment, the combiner unit 802 includes a first FIFO buffer 806a and a second FIFO buffer 806b. In some embodiments the first FIFO buffer 806a is configured to receive data from a first pseudo-channel 804a of a memory device and the second FIFO buffer 806b is configured to receive data from a second pseudo-channel 804b of the memory device. The combiner unit 802 further includes a first multiplexer 808a and a second multiplexer 808b. The first multiplexer 808a receives an output from the first FIFO buffer 806a as a first input and the output of the second FIFO buffer 806b as a second input. The second multiplexer 808a receives the output of the first FIFO buffer 806a as a first input and the output of the second FIFO buffer 806b as a second input. In some embodiments, the first multiplexer 808a and the second multiplexer 808b are configured to select between their respective inputs based at least in part on the selected precision level and the locations of the portions of data to be retrieved in the memory, such as whether the portion of data is in the first pseudo-channel 804a or the second pseudo-channel 804b.

In some embodiments, the combiner unit 802 further includes a first combiner circuitry 810a. The first combiner circuitry 810a receives the output of the first multiplexer 808a and an adjustment value stored in an adjustment register 812a. The adjustment value may be based on one or more other factors, such as the minimum and maximum values of the data bits that are not included in the retrieved data as a result of the selected precision level. In some embodiments the combiner circuitry 810a appends the output of the first multiplexer 808a with the adjustment value in the adjustment register 812a. In some embodiments the combiner unit 802 further includes a first filter 816a, which receives as input the output of the first combiner circuity 810a. The filter 816a is configured to detect a criterion associated with the output of the first combiner circuitry 810a (e.g., first portion of data) and set its output to a predetermined value based on the criterion. For example, the filter 816a may be a low value filter or a zero value filter that upon detecting that the value of a certain number of highest value bits in the data outputted from the first combiner circuity 810a is zero, sets its output as zero. In some embodiments, the output of the first filter 816a may be the output of the combiner unit 808d.

In some embodiments the combiner unit 802 further includes a first mixer 814a. The first mixer 814a, which can be implemented as wired logic, receives as inputs the outputs of the first multiplexer 808a and the second multiplexer 808b. In some embodiments, the output of the first multiplexer 808a includes a block of data that includes a first portion of data from a plurality of data elements and the output of the second multiplexer 808b includes a block of data that includes a second portion of data from the plurality of data elements. In some embodiments, the mixer 808a weaves or combines the two blocks of data together such that the first portion of one data item in the plurality of data items is paired with the second portion of the same data item.

In some embodiments, the combiner unit 802 further includes a second combiner circuitry 810b, which receives as input and output of the first mixer 814a and a second adjustment value stored in a second adjustment register 812b. In some embodiments, the combiner unit 802 further includes a second filter 816b which, similarly to the first filter 816a, sets its output to zero if the value of a certain number of highest value bits in the output of the second combiner circuitry 810b is zero.

The combiner unit may further include a third FIFO buffer 806c which receives an output of the first mixer 814a. The combiner unit 802 further includes a second mixer 814b which receives as inputs the output of the first FIFO buffer 806a, the output of the second FIFO buffer 806b, and the output of the third FIFO buffer 806c. Similarly, as described with respect to the first mixer 814a, the second mixer 814b may include wired logic that rearranges the data received from the FIFO buffers 808a, 808b, 808c to reassemble the portions of individual data items.

In some embodiments, the combiner unit 802 further includes a third multiplexer 808c and a fourth multiplexer 808d. The fourth multiplexer 808d receives as a first input the output of the second filter 816b. The fourth multiplexer 808d receives as a second input the output from the second mixer 814b. In some embodiments, the fourth multiplexer 808d selects between the inputs based on the selected precision level and/or the locations (e.g., first pseudo-channel 804a, second pseudo-channel 804b) of the portions of data. The third multiplexer 808c receives as a first input the output of the first filter 816a. The third multiplexer 808c receives as a second input the output of the fourth multiplexer 808d. In some embodiments, the third multiplexer 808c selects between its inputs based on the selected precision level and/or the locations (e.g., first pseudo-channel 804a, second pseudo-channel 804b) of the portions of data. The output of the third multiplexer 808c is provided to the processor.

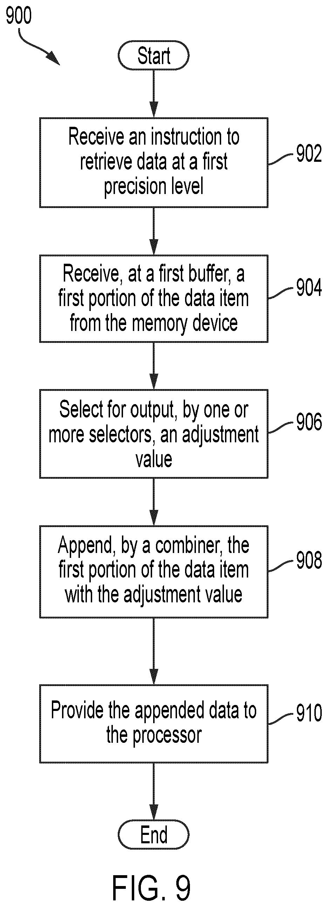

Fig. 9 depicts a flow diagram 900 of a process for retrieving data at two or more precision levels in accordance with one or more embodiments. The process starts, and at step 902, a combiner unit 606 receives an instruction or signal to retrieve data from a memory device 604 at a first precision level. A first portion of the data item may be stored at a first location (e.g., pseudo-channel 608a) on the memory device 604 and a second portion of the data item may be stored at a second location (e.g., pseudo-channel 608b) on the memory device 604. In step 904, a first buffer 610a of the combiner unit 606 may receive the first portion of the data item from the memory device 604. In step 906, an adjustment value is selected for output by one or more selectors 612. In some embodiments, the one or more selectors 612 includes a multiplexer in which the second portion of the data is a first input to the multiplexer and the adjustment value is a second input to the multiplexer, and multiplexer selects the adjustment value as its output. In step 908, a combiner circuitry 614 of the combiner unit 606 appends the first portion of the data item with the adjustment value. In some embodiments, a filter 816b may determine that the first portion of the data item has a value of zero and update the value of the appended data to zero. In step 910, the appended data is provided to the processor 603, and the process ends.

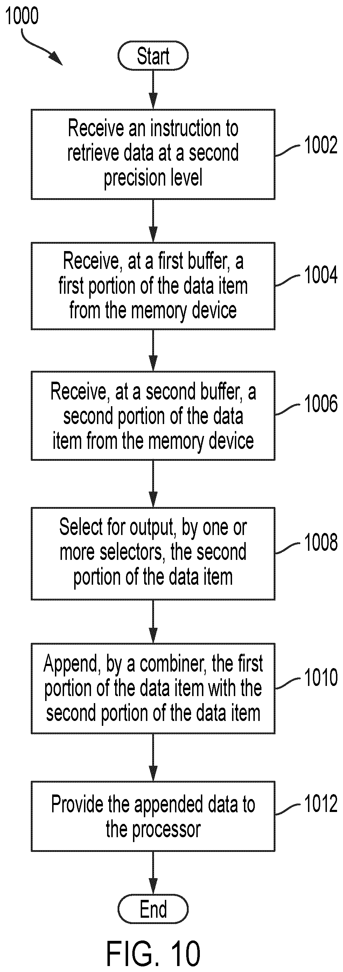

Fig. 10 depicts a flow diagram 1000 of a process for retrieving data at two or more precision levels in accordance with one or more embodiments. The process starts, and at step 1002, a combiner unit 606 receives an instruction or signal to retrieve data from a memory device 604 at a second precision level. A first portion of the data item is stored at a first location (e.g., pseudo-channel 608a) on the memory device 604 and a second portion of the data item is stored at a second location (e.g., pseudo-channel 608b) on the memory device 604. In step 1004, a first buffer 610a of the combiner unit 606 receives the first portion of the data item from the memory device 604. In step 1006, a second buffer 610b of the combiner unit 606 receives the second portion of the data item from the memory device 604. In step 1008, the second portion of the data item is selected for output by one or more selectors 612. In some embodiments, the one or more selectors 612 include a multiplexer in which the second portion of the data item is a first input to the multiplexer and the adjustment value is a second input to the multiplexer, and multiplexer selects the second portion of the data item as its output. In step 1010, a combiner circuitry 614 of the combiner unit 606 appends the first portion of the data item with the second portion of the data item. In some embodiments, a filter 816b may determine that the first portion of the data item has a value of zero and update the value of the appended data to zero. In step 1012, the appended data is provided to the processor 603, and the process ends.

One or more embodiments of the present disclosure may be implemented in one or more processors. The term processor may refer to one or more processors and/or one or more processing cores. The one or more processors may be hosted in a single device or distributed over multiple devices (e.g. over a cloud system). A processor may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processor, as used herein, each function is performed either by hardware configured, i.e., hard-wired, to perform that function, or by more general-purpose hardware, such as a CPU, configured to execute instructions stored in a non-transitory storage medium (e.g. memory). A processor may be fabricated on a single printed circuit board (PCB) or distributed over several interconnected PCBs. A processor may contain other processing circuits; for example, a processing circuit may include two processing circuits, an FPGA and a CPU, interconnected on a PCB.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the spirit and scope of the inventive concept.

The terminology used herein is for the purpose of describing particular embodiments only and is not intended to be limiting of the inventive concept. Also, unless explicitly stated, the embodiments described herein are not mutually exclusive. Aspects of the embodiments described herein may be combined in some implementations.

As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

Although exemplary embodiments of systems and methods for multi-precision retrieval have been specifically described and illustrated herein, many modifications and variations will be apparent to those skilled in the art. Accordingly, it is to be understood that systems and methods for multi-precision retrieval constructed according to principles of this disclosure may be embodied other than as specifically described herein. The disclosure is also defined in the following claims, and equivalents thereof.

The systems and methods for multi-precision retrieval may contain one or more combination of features set forth in the below statements.

Statement 1: A system comprising: a processor; a memory device for storing a first portion of data in association with a first interface and a second portion of data in association with a second interface; and a combiner unit communicably coupled to the memory device and the processor, the combiner unit comprising: a first buffer coupled to the first interface for receiving the first portion of data; a second buffer coupled to the second interface for receiving the second portion of data; and one or more selector units coupled to the first buffer and second buffer, the one or more selector units selecting for output the first portion of data based on the combiner unit being in a first state, and selecting for output the first portion of data and the second portion of data based on the combiner unit being in a second state.

Statement 2: The system of Statement 1, wherein the one or more selector units comprises: a first multiplexer, wherein a first input to the first multiplexer is coupled to the first buffer, and a second input of the first multiplexer is coupled to the second buffer; and a second multiplexer, wherein a first input to the second multiplexer is coupled to the first buffer, a second input to the second multiplexer is coupled to the second buffer, and a third input of the second multiplexer is coupled to an adjustment value generator.

Statement 3: The system of Statement 2, wherein the second multiplexer selects the third input as an output based on the combiner unit being in the first state.

Statement 4: The system of Statements 2 or 3, wherein the combiner unit further comprises: a combiner coupled to an output of the first multiplexer and an output of the second multiplexer, wherein the combiner joins the output of the first multiplexer with the output of the second multiplexer.

Statement 5: The system of one of Statements 1-4, wherein the first state is associated with a first level of precision for the data, and the second state is associated with a second level of precision for the data.

Statement 6: The system of one of Statements 1-5, wherein the combiner unit further comprises: a filter configured to detect a criterion associated with the first portion of data and set an output of the combiner unit to a predetermined value based on the criterion.

Statement 7: The system of Statement 6, wherein the criterion is that the first portion of data has a value of zero.

Statement 8: The system of one of Statements 1-7, wherein the first state or the second state is selected from among n states, wherein n is based on a number of portions into which the data is partitioned.

Statement 9: The system of Statements 1-8, wherein the processor is communicably coupled to the memory device and the combiner unit, and wherein the processor is configured to receive an output of the memory device based on a first criterion and an output of the combiner unit based on a second criterion.

Statement 10: A device, comprising: a combiner unit communicably coupled to a memory device and a processor, the combiner unit comprising: a first buffer coupled to the first interface for receiving the first portion of data; a second buffer coupled to the second interface for receiving the second portion of data; and one or more selector units coupled to the first buffer and second buffer, the one or more selector units selecting for output the first portion of data based on the combiner unit being in a first state, and selecting for output the first portion of data and the second portion of data based on the combiner unit being in a second state.

Statement 11: The device of Statement 10, wherein the one or more selector units comprises: a first multiplexer, wherein a first input to the first multiplexer is coupled to the first buffer, and a second input of the first multiplexer is coupled to the second buffer; and a second multiplexer, wherein a first input to the second multiplexer is coupled to the first buffer, a second input to the second multiplexer is coupled to the second buffer, and a third input of the second multiplexer is coupled to an adjustment value generator.

Statement 12: The device of Statement 11, wherein the combiner unit further comprises: a combiner coupled to an output of the first multiplexer and an output of the second multiplexer, wherein the combiner joins the output of the first multiplexer with the output of the second multiplexer.

Statement 13: The device of one of Statements 10-12, wherein the first state is associated with a first level of precision for the data, and the second state is associated with a second level of precision for the data.

Statement 14: The device of one of Statements 10-13, wherein the combiner unit further comprises: a filter configured to detect a criterion associated with the first portion of data and set an output of the combiner unit to a predetermined value based on the criterion.

Statement 15: The device of one of Statements 10-14, wherein the first state or the second state is selected from among n states, wherein n is based on a number of portions into which the data is partitioned.

Statement 16: A method comprising: receiving an instruction to retrieve a data item from a memory device at a first precision level, wherein a first portion of the data item is stored at a first location on the memory device and a second portion of the data item is stored at a second location on the memory device; receiving, at a first buffer, the first portion of the data item from the memory device; selecting for output, by one or more selectors, an adjustment value; appending, by a combiner, the first portion of the data item with the adjustment value; and providing the first portion of data appended with the adjustment term to the processor.

Statement 17: The method of Statement 16, further comprising: selecting, by a multiplexer, the adjustment value, wherein the second portion of the data is a first input to the multiplexer and the adjustment value is a second input to the multiplexer.

Statement 18: The method of Statements 16 or 17, further comprising: determining the first portion of the data item has a value of zero; and updating the value of the appended data to zero.

Statement 19: The method of one of Statements 16-18, wherein the first portion of the data item comprises bits of higher significance than bits in the second portion of the data item.

Statement 20: The method of one of Statements 16-19, further comprising: receiving a second instruction to retrieve the data item from the memory device at a second precision level; receiving, at the first buffer, the first portion of the data item from the memory device; receiving, at a second buffer, the second portion of the data item from the memory device; selecting for output, by one or more selectors, the second portion of the data item; appending, by a combiner, the first portion of the data item with the second portion of the data item; and providing the first portion of data appended with the second portion of the data item to the processor.

## Claims

1. A device, comprising:
a combiner unit (118, 606, 708, 802) configured to be communicably coupled to a memory device (104, 604, 706) and a processor (102, 603, 704), the combiner unit (118, 606, 708, 802) comprising:
a first buffer (610a, 716a, 806a) coupled to a first interface (608a, 712a) for receiving the first portion of data;
a second buffer (610b, 716b, 806b) coupled to a second interface (608b, 712b) for receiving the second portion of data; and
one or more selector units (612) coupled to the first buffer (610a, 716a, 806a) and second buffer (610b, 716b, 806b), the one or more selector units (612) configured to select for output the first portion of data based on the combiner unit (118, 606, 708, 802) being in a first state, and configured to select for output the first portion of data and the second portion of data based on the combiner unit (118, 606, 708, 802) being in a second state.

2. A system comprising:
the device of claim 1;
the processor (102, 603, 704); and
the memory device (104, 604, 706) for storing the first portion of data in association with the first interface (608a, 712a) and the second portion of data in association with the second interface (608b, 712b);
wherein the combiner unit (118, 606, 708, 802) is communicably coupled to the memory device (104, 604, 706) and the processor (102, 603, 704).

3. The device or system of any one of the preceding claims, wherein the one or more selector units (612) comprise:
a first multiplexer (718a), wherein a first input of the first multiplexer (718a) is coupled to the first buffer (716a), and a second input of the first multiplexer (718a) is coupled to the second buffer (716b); and
a second multiplexer (718b), wherein a first input of the second multiplexer (718b) is coupled to the first buffer (716a), a second input of the second multiplexer (718b) is coupled to the second buffer (716b), and a third input of the second multiplexer (718b) is coupled to an adjustment value generator (720).

4. The device or system of claim 3, wherein the second multiplexer (718b) is configured to select the third input as an output based on the combiner unit (708) being in the first state.

5. The device or system of claim 3 or 4, wherein the combiner unit (708) further comprises:
a combiner (722) coupled to an output of the first multiplexer (718a) and an output of the second multiplexer (718b), wherein the combiner (722) is configured to join the output of the first multiplexer (718a) with the output of the second multiplexer (718b).

6. The device or system of any one of the preceding claims, wherein the first state is associated with a first level of precision for the data, and the second state is associated with a second level of precision for the data.

7. The system of any one of the preceding claims, wherein the combiner unit (802) further comprises:
a filter (816a) configured to detect a criterion associated with the first portion of data and set an output of the combiner unit (802) to a predetermined value based on the criterion.

8. The device or system of claim 7, wherein the criterion is that the first portion of data has a value of zero.

9. The device or system of any one of the preceding claims, wherein the first state or the second state is selected from among n states, wherein n is based on a number of portions into which the data is partitioned.

10. The device or system of any one of the preceding claims, wherein the processor (603) is communicably coupled to the memory device (604) and the combiner unit (606), and wherein the processor (603) is configured to receive an output of the memory device (604) based on a first criterion and an output of the combiner unit (606) based on a second criterion.

11. A method comprising:
receiving (902) an instruction to retrieve a data item from a memory device (104, 604, 706) at a first precision level, wherein a first portion of the data item is stored at a first location on the memory device (104, 604, 706) and a second portion of the data item is stored at a second location on the memory device (104, 604, 706);
receiving (904), at a first buffer (610a, 716a, 806a), the first portion of the data item from the memory device (104, 604, 706);
selecting (906) for output, by one or more selectors (612), an adjustment value;
appending (908), by a combiner (118, 606, 708, 802), the first portion of the data item with the adjustment value; and
providing (910) the first portion of the data item appended with the adjustment value to a processor (102, 603, 704).

12. The method of claim 11, further comprising:
selecting, by a multiplexer (718a), the adjustment value, wherein the second portion of the data item is a first input to the multiplexer (718a) and the adjustment value is a second input to the multiplexer (718a).

13. The method of claim 11 or 12, further comprising:
determining that the first portion of the data item has a value of zero; and
updating the value of the appended data to zero.

14. The method of any one of claims 11 to 13, wherein the first portion of the data item comprises bits of higher significance than bits in the second portion of the data item.

15. The method of any one of claims 11 to 14, further comprising:
receiving (1002) a second instruction to retrieve the data item from the memory device (104, 604, 706) at a second precision level;
receiving (1004), at the first buffer (610a, 716a, 806a), the first portion of the data item from the memory device (104, 604, 706);
receiving (1006), at a second buffer (610b, 716b, 806b), the second portion of the data item from the memory device (104, 604, 706);
selecting (1008) for output, by the one or more selectors (612), the second portion of the data item;
appending (1010), by a combiner (118, 606, 708, 802), the first portion of the data item with the second portion of the data item; and
providing (1012) the first portion of data appended with the second portion of the data item to the processor (102, 603, 704).
